# EUROPÄISCHE PATENTSCHRIFT

(11) **EP 3 483 842 B1**
(45) Veröffentlichungstag und Bekanntmachung des Hinweises auf die Patenterteilung: **01.01.2025**
(21) Anmeldenummer: 18204291.1
(22) Anmeldetag: 05.11.2018
(51) Int. Cl.: G07C 9/20, G06F 21/31, G06F 21/45, G07C 9/27, G07C 9/25

(54) **AUTHENTIFIZIERUNGSSYSTEM ZUR AUTHENTIFIZIERUNG EINER PERSON, VERFAHREN ZUR AUTHENTIFIZIERUNG UND COMPUTERPROGRAMMPRODUKT**
AUTHENTICATION SYSTEM FOR AUTHENTICATING A PERSON, METHOD FOR AUTHENTICATING AND COMPUTER PROGRAM PRODUCT
SYSTÈME D'AUTHENTIFICATION PERMETTANT D'AUTHENTIFIER UNE PERSONNE, PROCÉDÉ D'AUTHENTIFICATION ET PRODUIT DE PROGRAMME INFORMATIQUE

(30) Priorität: 10.11.2017 DE 102017126353
(43) Veröffentlichungstag der Anmeldung: 15.05.2019
(73) Patentinhaber: Bundesdruckerei GmbH, 10969 Berlin (DE)
(72) Erfinder: WILKE, Andreas, 13509 Berlin (DE); MAIER, Rebecca, 12157 Berlin (DE)
(74) Vertreter: Patentship Patentanwaltsgesellschaft mbH

(56) Entgegenhaltungen:
- EP-A2- 0 990 756
- WO-A2-2010/075921
- US-A- 5 337 043
- US-A1- 2004 148 526
- US-A1- 2014 053 248
- US-A1- 2017 249 794

## Beschreibung

Um den Zutritt zu Gebäuden nur berechtigten Personen zu ermöglichen, werden beispielsweise Sicherheitsschleusen verwendet. Solche Sicherheitsschleusen sind üblicherweise an allen Eingängen des Gebäudes angeordnet. Jede Person, die das Gebäude betritt, muss sich an diesen Sicherheitsschleusen authentifizieren. Je größer die Sicherheit sein soll, desto strenger sind die Sicherheitsregeln, die bei einer Authentifizierung abgefragt werden.

Beispielsweise muss eine Person an einer Sicherheitsschleuse einen Ausweis vorzeigen, einen elektronischen Chip, wie einen Token einem Scanner präsentieren und/oder biometrische Daten abgeben. Je größer die Anzahl der abgefragten Sicherheitsparameter ist, d. h. je höher die Sicherheitsregeln an der Schleuse sind, desto unkomfortabler wird der Zugang für die Person.

Die Offenlegungsschrift EP 0 990 756 A2 offenbart ein Zugangskontrollsystem.

Die Offenlegungsschrift WO 2010/075921 A2 offenbart ein anforderungsbasiertes Personenidentifikationsverfahren.

Die Offenlegungsschrift US 2014/053248 A1 offenbart ein Zugriffskontrollsystem.

Die Patentschrift US 5 337 043 A offenbart ein Zugriffskontrollsystem.

Die Offenlegungsschriften US 2017/249794 A1 und US 2004/148526 A1 offenbaren Zugangskontrollsysteme mit zeitabhängigen Zugangskriterien.

Aufgabe der Erfindung ist es, ein vorteilhaftes Konzept für die Authentifizierung einer Person aufzuzeigen.

Diese Aufgabe wird durch die Merkmale der unabhängigen Ansprüche gelöst. Vorteilhafte Ausführungsformen sind Gegenstand der abhängigen Patentansprüche der Beschreibung sowie der Figuren.

Gemäß einem ersten Aspekt wird ein Authentifizierungssystem zur Authentifizierung einer Person in unterschiedlichen Zeitenintervallen einer vorbestimmten Zeitintervallgruppe gemäß Anspruch 1 bereitgestellt.

Zu unterschiedlichen Zeiten können bei einer Sicherheitsschleuse unterschiedlich strenge Sicherheitskriterien nötig sein. Die Abfrage von Sicherheitskriterien abhängig von einer Zeit, zu der die Authentifizierung stattfinden soll, vereinfacht das Authentifizieren einer Person und kann auch den Vorgang des Authentifizierens beschleunigen.

Bei dem Authentifizierungssystem kann es sich beispielsweise um eine Sicherheitsschleuse an einem Gebäude handeln. Bei der vorbestimmten Zeitintervallgruppe kann es sich um einzelne Tageszeitabschnitte handeln. Die unterschiedlichen Zeitintervalle können dann zum Beispiel einer Nacht, einem Morgen, einem Mittag usw. zugeordnet werden. Insbesondere können die Zeitintervalle einer üblichen Arbeitszeit, einer Ankunfts-, bzw. Feierabendzeit und einer unüblichen Arbeitszeit zugeordnet werden.

Das Authentifizierungsschema kann die Abfrage eines oder mehrerer personenbezogener Merkmale umfassen, wie beispielsweise ein biometrisches Merkmal, ein elektronisches Merkmal, wie ein Token oder die Eingabe einer alphanumerischen Zeichenfolge. Die Erfassungseinrichtung kann diesbezüglich einen Scanner zum Erfassen dieser Merkmale aufweisen, wie beispielsweise eine Bildkamera oder einen Sensor zum Erfassen von UV-, IR, oder Weißlicht. Des Weiteren kann die Erfassungseinrichtung einen Scanner zum Erfassen biometrischer Merkmale aufweisen, wie beispielsweise einen Irisscanner, einen Handvenenscanner oder einen Fingerabdruckscanner. Der Prozessor kann eine ausführende Einheit sein und auch die Erfassungseinrichtung umfassen. Beispielsweise handelt es sich bei dem Prozessor um ein Computersystem in einer Schleusenanlage mit einer CPU und/oder einem Mikrocontroller.

Die Zeitintervallgruppe umfasst ein erstes Zeitintervall und ein zweites Zeitintervall. Dem ersten Zeitintervall ist ein erstes Authentifizierungsschema zugeordnet. Dem zweiten Zeitintervall ist ein zweites Authentifizierungsschema zugeordnet. Das erste Authentifizierungsschema umfasst die Erfassung des zumindest einen personenbezogenen Merkmals. Das zweite Authentifizierungsschema umfasst die Erfassung eines zweiten personenbezogenen Merkmals. Hierbei ist die Erfassungseinrichtung so ausgebildet, das zumindest eine personenbezogene Merkmal zu erfassen, falls das aktuelle Zeitintervall dem ersten Zeitintervall entspricht, oder das zweite personenbezogene Merkmal zu erfassen, falls das aktuelle Zeitintervall dem zweiten Zeitintervall entspricht.

Das erste Zeitintervall kann ein als normal definierter Zeitraum sein, wie beispielsweise eine übliche Arbeitszeit. Das zweite Zeitintervall kann dem ersten Zeitintervall unmittelbar vorangestellt, unmittelbar nachgestellt oder aber auch zeitlich beabstandet sein. Durch die unterschiedlichen Merkmale, die zu den unterschiedlichen Zeitintervallen erfasst werden, kann es einem Besucher oder einer Person erleichtert werden, die Sicherheitsschleuse zu passieren, je nachdem in welchem Zeitintervall er die Sicherheitsschleuse passieren will. Beispielsweise umfasst das erste Authentifizierungsschema, das in dem ersten Zeitintervall abgefragt wird lediglich das Auslesen eines elektronischen Chips, beispielsweise eines Tokens. Das zweite Authentifizierungsschema, das in dem zweiten Zeitintervall abgefragt wird umfasst ein zweites personenbezogenes Merkmal, sodass ein Unterschied in der Erfassung der personenbezogenen Merkmale zwischen dem ersten Authentifizierungsschema und dem zweiten Authentifizierungsschema liegt. Dieser Unterschied kann die Ergonomie für Benutzer in dem ersten Zeitintervall erhöhen und die Sicherheit in dem zweiten Zeitintervall erhöhen.

Das zweite Authentifizierungsschema umfasst die Erfassung des personenbezogenen Merkmals und des zweiten personenbezogenen Merkmals. Hierbei ist die Erfassungseinrichtung ausgebildet, das zumindest eine personenbezogene Merkmal zu erfassen, falls das aktuelle Zeitintervall dem ersten Zeitintervall entspricht und zusätzlich das zweite personenbezogene Merkmal zu erfassen, falls das aktuelle Zeitintervall dem zweiten Zeitintervall entspricht.

Die Erfassung unterschiedlicher personenbezogener Merkmale durch die Erfassungseinrichtung zu den unterschiedlichen Zeitintervallen, d. h. in dem ersten Zeitintervall oder in dem zweiten Zeitintervall, kann je nach Art des erfassten personenbezogenen Merkmals den Zugang durch die Sicherheitsschleuse oder zu dem abgesperrten Bereich erleichtern oder erschweren. Somit kann die Sicherheitsstufe an die unterschiedlichen Zeitintervalle angepasst werden. Beispielsweise wird in dem ersten Zeitintervall lediglich das personenbezogene Merkmal erfasst und in dem zweiten Zeitintervall das personenbezogene Merkmal als erstes personenbezogenes Merkmal und zusätzlich ein zweites personenbezogenes Merkmal erfasst. Somit ist die Sicherheit in dem zweiten Zeitintervall gegenüber der Sicherheit in dem ersten Zeitintervall erhöht.

Der Prozessor ist ausgebildet, die Person auf der Basis des jeweils erfassten personenbezogenen Merkmals zu authentifizieren.

Die Authentifizierung der Person auf der Basis des erfassten Merkmals schafft eine Sicherheit bei der Sicherheitsschleuse, indem der Prozessor entscheidet, wie die Authentifizierung vollzogen wird.

Die Erfassungseinrichtung oder der Prozessor ist ausgebildet, einen Zeitpunkt der Authentifizierung der Person zu erfassen und den erfassten Zeitpunkt der Authentifizierung dem ersten Zeitintervall oder dem zweiten Zeitintervall zuzuordnen.

Dadurch, dass die Zeitpunkte der Erfassung einem bestimmten Zeitintervall, d. h. dem ersten Zeitintervall oder dem zweiten Zeitintervall, zugeordnet werden, kann nicht nur eine Bestimmung desjenigen Zeitintervalls stattfinden, in dem die Authentifizierung stattfindet oder stattfinden soll, sondern auch die Daten mit einem Zeitpunkt versehen werden, die bei einer späteren Auswertung oder Datenanalyse sinnvoll sein können. Die Authentifizierung in diesem Sinn umfasst bereits einen Authentifizierungsversuch, unabhängig davon, wie dieser ausgeht.

Zumindest ein Zeitintervall der vorbestimmten Zeitintervallgruppe ist durch eine vorbestimmte Häufigkeit von Authentifizierungen charakterisiert. Hierbei ist der Prozessor ausgebildet, eine Häufigkeit von Authentifizierungen zu überwachen, um das Erreichen der vorbestimmten Häufigkeit zu detektieren.

Wird die Häufigkeit von Authentifizierungen detektiert, so kann bestimmt werden, welche und vor allem wie viele Personen sich hinter dem Authentifizierungssystem, also in dem gesicherten Bereich aufhalten. Befinden sich bereits Personen in dem gesicherten Bereich, so können sich diese Personen gegenseitig identifizieren. Hierdurch kann eine Sicherheitsstufe beim Authentifizierungssystem angepasst werden, insbesondere reduziert werden.

Der Prozessor ist dazu ausgebildet, einen Anfangszeitpunkt und/oder einen Endzeitpunkt des zumindest einen Zeitintervalls der vorbestimmten Zeitintervallgruppe anzupassen, wenn die überwachte Häufigkeit von Authentifizierungen innerhalb des Zeitintervalls einen vorbestimmten ersten Grenzwert unterschreitet oder außerhalb des Zeitintervalls einen vorbestimmten zweiten Grenzwert überschreitet.

Durch die Anpassung des zumindest einen Zeitintervalls, insbesondere des ersten Zeitintervalls, an die Häufigkeit, die der Prozessor erfasst hat kann eine dynamische Anpassung der Zeitintervalle realisiert werden. Der erste Grenzwert kann beispielsweise 1 sein, sodass das Zeitintervall angepasst wird, wenn keine Person Authentifiziert wurde.

Gemäß einer vorteilhaften Ausgestaltung umfasst die überwachte Häufigkeit innerhalb des Zeitintervalls ein erstes Auftreten einer Authentifizierung und/oder ein letztes Auftreten einer Authentifizierung innerhalb eines Prüfzeitbereichs.

Der Prüfzeitbereich ist beispielsweise ein Tag bzw. 24 Stunden. Findet eine erste Authentifizierung beispielsweise morgens um 7 Uhr statt, wenn der erste Arbeitnehmer den Sicherheitsbereich betritt, und eine letzte Authentifizierung abends um 20 Uhr, wenn der letzte Arbeitnehmer den Sicherheitsbereich verlässt, so kann hiervon die Bestimmung der unterschiedlichen Intervalle abhängig gemacht werden. Diese Authentifizierung kann einen Anfang oder ein Ende des zumindest einen Zeitintervalls betreffen, aber auch einen Zeitraum betreffen, der kürzer als das zumindest eine Zeitintervall ist und in diesem liegt, einen Prüfzeitbereich. Dieser Prüfzeitbereich umfasst beispielsweise 10 Minuten und alle Authentifizierungen innerhalb dieses Prüfzeitbereichs werden addiert. Der Anfangspunkt des ersten Zeitraums liegt beispielsweise eine Stunde nach dem ersten Auftreten eine Authentifizierung, als an einem vorbestimmten Zeitpunkt nach des überschreiten des zweiten Grenzwerts.

Der Prozessor ist dazu ausgebildet, im laufenden Betrieb des Authentifizierungssystems die Häufigkeit von Authentifizierungen zu überwachen. Dies erfolgt, um das Erreichen der vorbestimmten Häufigkeit zu detektieren und den Anfangszeitpunkt und/oder den Endzeitpunkt des zumindest einen Zeitintervalls in einer vorbestimmten Zeitintervallgruppe dem laufenden Betrieb des Authentifizierungssystems anzupassen.

Ein Vorteil hiervon ist es, dass das zumindest eine Zeitintervall im laufenden Betrieb angepasst werden kann und so eine dynamische Anpassung des zumindest einen Zeitintervalls erfolgt. Die Anpassung des zumindest einen Zeitintervalls kann je nach Benutzerverhalten angepasst werden, ohne separate Anlernphasen oder Benutzereingaben vorzunehmen. Dies kann automatisch durchgeführt werden und somit unabhängig von einem Administrator oder Verwalter des Authentifizierungssystems.

Gemäß einer vorteilhaften Ausgestaltung ist zumindest ein weiteres Zeitintervall der vorbestimmten Zeitintervallgruppe durch den Anfangszeitpunkt und/oder den Endzeitpunkt des zumindest einen Zeitintervalls charakterisiert. Der Prozessor ist dazu ausgebildet, einen Anfangszeitpunkt und/oder einen Endzeitpunkt des zumindest einen weiteren Zeitintervalls basierend auf dieser Charakterisierung festzulegen.

Die Abhängigkeit des einen weiteren Zeitintervalls, insbesondere des zweiten Zeitintervalls, von einem Anfangszeitpunkt und/oder einem Endzeitpunkt des zumindest einen Zeitintervalls, insbesondere des ersten Zeitintervalls, ermöglicht es, einen Übergangszeitraum zu schaffen. In diesem Übergangszeitraum können personenbezogene Merkmale erfasst werden, die über die in dem ersten Zeitraum erfassten personenbezogenen Merkmale hinausgehen, aber noch nicht ein Maximum an möglichen Erfassten personenbezogenen Merkmalen darstellen.

Gemäß einer vorteilhaften Ausgestaltung ist die Erfassungseinrichtung dazu ausgebildet, als personenbezogenes Merkmal zumindest eines der folgenden personenbezogenen Merkmale, insbesondere optisch oder elektronisch, zu erfassen: einen elektronischen Datensatz, ein biometrisches Merkmal der Person oder eine elektronische Datei, insbesondere ein Token, oder ein Sicherheitsmerkmal eines Identifikationsdokuments oder eine Zeichenfolge einer maschinenlesbaren Zone des Identifikationsdokuments.

Derartige personenbezogene Merkmale können Personen eindeutig zugeordnet werden, was eine Identifikation der Person bei einer Authentifizierung ermöglicht. Durch eine Kombination dieser Merkmale kann eine Sicherheit weiter erhöht werden.

Gemäß einer weiteren vorteilhaften Ausgestaltung ist die Erfassungseinrichtung ausgebildet, das personenbezogene Merkmal optisch, insbesondere anhand eines Identifikationsdokuments der Person oder durch Aufnahme eines biometrischen Merkmals der Person, zu erfassen.

Eine optische Erfassung lässt sich einfach realisieren. So kann ein Benutzer ohne großen Zeitaufwand eine Authentifizierung durchführen. Dies ist eine intuitive und ergonomische Methode einen Benutzer zu authentifizieren Die Erfassungseinrichtung kann hierbei eine Bildkamera oder auch eine Erfassungseinrichtung zum Erfassen von UV- oder IR-Licht, Weißlicht sein oder einen Irisscanner oder einen Scanner für andere biometrische Merkmale umfassen.

Gemäß einer weiteren vorteilhaften Ausgestaltung ist das personenbezogene Merkmal eine elektronische Datei oder ein elektronischer Datensatz. Die Erfassungseinrichtung weist hierbei eine Kommunikationsschnittstelle auf, welche ausgebildet ist, das personenbezogene Merkmal elektronisch zu erfassen, insbesondere aus einem Chip eines Identifikationsdokumentes auszulesen.

Das elektronische Auslesen von Dateien oder Datensätzen beispielsweise aus einem Token geht sehr schnell und kann sehr genaue Dateninformationen übertragen. Dies spart Zeit gegenüber einer manuellen Eingabe von Daten und ist für einen Benutzer ergonomisch.

Gemäß einer vorteilhaften Ausgestaltung ist der Prozessor dazu ausgebildet, das jeweilige personenbezogene Merkmal mit einem Referenzmerkmal zu vergleichen, um die Person bei einer Vergleichsbestimmung zu authentifizieren.

Ein Vergleich mit einem Referenzmerkmal ist eine Möglichkeit, zuverlässig festzustellen, ob ein personenbezogenes Merkmal bereits hinterlegt wurde. Nur Personen, deren personenbezogene Merkmale bereits als Referenzmerkmal hinterlegt wurden, d. h. Personen, die bekannt sind, werden authentifiziert und eingelassen.

Gemäß einem zweiten Aspekt der Erfindung wird die Aufgabe durch ein Verfahren zur Authentifizierung einer Person in unterschiedlichen Zeitintervallen einer vorbestimmten Zeitintervallgruppe gemäß Anspruch 8 gelöst.

Gemäß einem dritten Aspekt wird die Aufgabe durch ein Computerprogrammprodukt mit einem Programmcode zum Ausführen eines Verfahrens der oben beschriebenen Art gelöst, wenn der Programmcode auf einem Computer ausgeführt wird.

Weitere Ausführungsbeispiele werden Bezug nehmend auf die beiliegenden Figuren näher erläutert. Es zeigen:
- Fig. 1: eine schematische Darstellung eines Authentifizierungssystems gemäß einer Ausgestaltung der Erfindung;
- Fig. 2: ein beispielhaftes Häufigkeitsdiagramm von Authentifizierungen für ein Authentifizierungssystem gemäß einer Ausgestaltung der Erfindung;
- Fig. 3a: ein weiteres beispielhaftes Häufigkeitsdiagramm von Authentifizierungen;
- Fig. 3b: ein weiteres beispielhaftes Häufigkeitsdiagramm von Authentifizierungen, das auf dem beispielhaften Häufigkeitsdiagramm gemäß Figur 3a basiert; und
- Fig. 4: ein schematisches Diagramm eines Verfahrens zur Authentifizierung einer Person gemäß einer Ausführungsform.

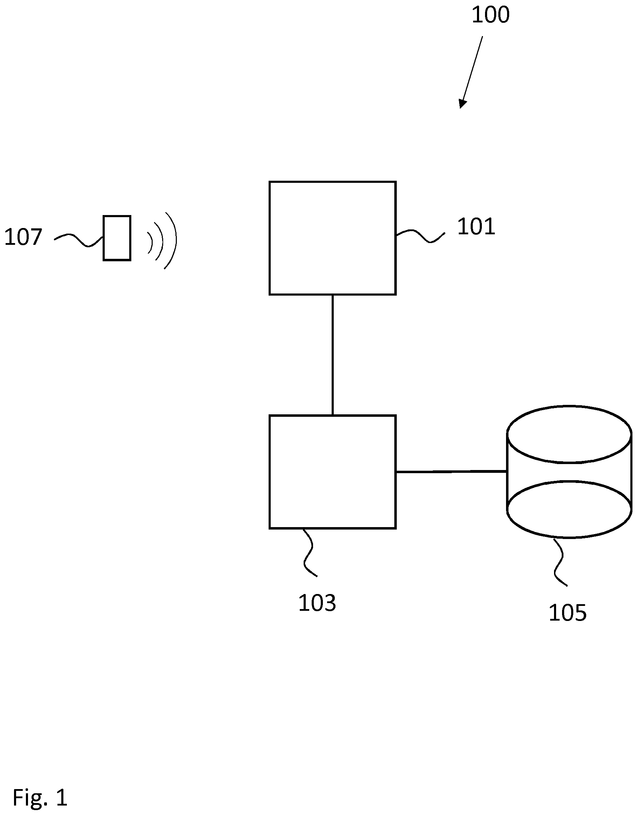

Fig. 1 zeigt eine schematische Darstellung eines Authentifizierungssystems 100. Ein derartiges Authentifizierungssystem 100 kann beispielsweise in einer Sicherheitsschleuse eines Gebäudes angeordnet sein. In einer weiteren Ausgestaltung kann das Authentifizierungssystem 100 in einem Computersystem oder in anderen Einrichtungen angeordnet sein, die eine Authentifizierung einer Person erfordern. Hierbei dient das Authentifizierungssystem 100 dazu, berechtigte Personen von unberechtigten Personen zu unterscheiden. In der Regel dient das Authentifizierungssystem 100 dazu, berechtigten Personen einen Zutritt zu einem geschützten Bereich, wie einem Gebäude oder einem Computersystem, zu gewähren und unberechtigten dritten Personen eben diesen Zugang zu verwehren.

Das Authentifizierungssystem 100 weist eine Erfassungseinrichtung 101 auf. Die Erfassungseinrichtung 101 ist dazu eingerichtet, personenbezogene Merkmale zu erfassen. Im beschriebenen Ausführungsbeispiel umfasst die Erfassungseinrichtung 101 mehrere Detektoren und stellt so eine Detektoranordnung dar. Die Erfassungseinrichtung 101 umfasst im gezeigten Ausführungsbespiel ein Funkmodul, das dazu eingerichtet ist, elektronische Daten eines Tokens auszulesen. Die Erfassungseinrichtung 101 umfasst des Weiteren eine Bildkamera zum Erfassen von biometrischen Daten. Die Erfassungseinrichtung 101 umfasst des Weiteren ein Eingabefeld zum Eingeben einer alphanumerischen Zeichenkette. Diese einzelnen Bauteile sind in Fig. 1 aus Gründen der Übersichtlichkeit nicht gezeigt. Sie können innerhalb oder an der Erfassungseinrichtung 101 angeordnet sein. In einer weiteren Ausgestaltung umfasst die Erfassungseinrichtung 101 weitere Sensoren und/oder Erfassungseinrichtungen, wie beispielsweise ein Telefon für Rückfragen, Infrarotsensoren, Iris-Scanner, Weißlichtscanner und Ultraviolettsensoren.

Das Authentifizierungssystem 100 weist des Weiteren eine Prozessor 103 auf. Im gezeigten Ausführungsbeispiel handelt es sich bei dem Prozessor 103 um ein Computersystem, welches eine CPU umfasst. Der Prozessor 103 ist mit der Erfassungseinrichtung 101 verbunden, so dass Daten, die von der Erfassungseinrichtung 101 erfasst werden, von dem Prozessor 103 verarbeitet werden können. In einer alternativen Ausgestaltung handelt es sich bei dem Prozessor 103 um einen Mikrocontroller, der in die Erfassungseinrichtung 101 integriert oder mit der Erfassungseinrichtung 101 verbunden ist. In einer weiteren Ausgestaltung ist die Erfassungseinrichtung 101 in den Prozessor 103 integriert. In einer weiteren Ausgestaltung ist der Prozessor 103 ein Serversystem, das über eine Datennetzwerkverbindung mit der Erfassungseinrichtung 101 verbunden ist.

Das Authentifizierungssystem 100 weist des Weiteren einen Speicher 105 auf. Der Speicher 105 ist mit dem Prozessor 103 verbunden, sodass der Prozessor 103 auf Daten in dem Speicher 105 zugreifen kann. Der Speicher 105, im gezeigten Ausführungsbeispiel eine Datenbank, umfasst Referenzdaten, die zu den personenbezogenen Daten, die von der Erfassungseinrichtung 101 erfasst werden. Der Speicher 105 ist hierbei unmittelbar bei der Erfassungseinrichtung 101 räumlich angeordnet. In einerweiteren Ausgestaltung ist zusätzlich der Prozessor 103 an der Erfassungseinrichtung 101 räumlich angeordnet. Die von der Erfassungseinrichtung 101 erfassten personenbezogenen Merkmale und die Referenzdaten in dem Speicher 105 sind somit lediglich lokal hinterlegt. In einer alternativen Ausgestaltung ist der Speicher 105 an einem zentralen Ort oder einem anderen von dem Prozessor 103 und/oder der Erfassungseinrichtung 101 räumlich entfernten Ort angeordnet. Die Verbindung zwischen dem Prozessor 103 und dem Speicher 105 ist in diesem Fall eine Datennetzwerkverbindung, beispielsweise unter Verwendung des Internets.

Der Prozessor 103 ist dazu eingerichtet, von der Erfassungseinrichtung 101 erfasste personenbezogene Merkmale mit personenbezogenen Merkmale zu vergleichen, die der Prozessor 103 aus dem Speicher 105 ausliest.

Fig. 1 zeigt des Weiteren einen Token 107. Der Token 107 ist einer Person zugeordnet. Auf dem Token 107 sind personenbezogene Merkmale zu dieser Person abgespeichert. Die Erfassungseinrichtung 101 ist dazu eingerichtet, diesen Token 107 auszulesen. Hierzu bringt der Benutzer des Tokens den Token in die Nähe der Erfassungseinrichtung 101, so dass eine räumliche Distanz so gering wird, dass die Erfassungseinrichtung 101 die Daten mittels eines Funkmoduls aus dem Token 107 auslesen kann.

Die Erfassungseinrichtung 101 registriert jeden Authentifizierungsversuch, d. h., will eine Person, ob berechtigte Person oder unberechtigte Person, eine Authentifizierung durchführen, so wird dies registriert. Zur Authentifizierung erfasst die Erfassungseinrichtung 101 oder der Prozessor 103 die Zeit, zu der die Authentifizierung stattfand.

Aus den erfassten Authentifizierungen kann die Häufigkeit von Authentifizierungen zu bestimmten Zeiten bestimmt werden.

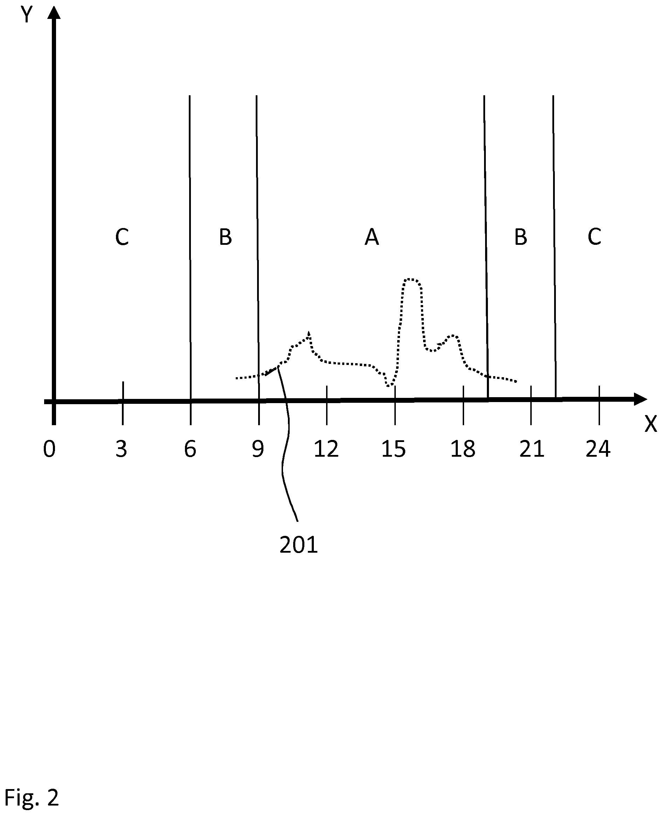

Fig. 2 zeigt ein Häufigkeitsdiagramm. Die X-Achse X zeigt die Uhrzeit von 0 bis 24 Uhr, angegeben in 3-Stunden-Schritten. Die Y-Achse Y zeigt die Häufigkeit von Authentifizierungsversuchen zu einer zugehörigen Uhrzeit. Erfasst die Erfassungseinrichtung 101 eine Authentifizierung, so wird diese einer Uhrzeit zugeordnet. In Fig. 2 ist eine Häufigkeitskurve 201 als gepunktete Linie dargestellt. Im gezeigten Ausführungsbeispiel handelt es sich bei der der Häufigkeitskurve 201, um eine Hüllkurve zu einzelnen Häufigkeitswerten. In dieser Darstellung ist also nicht jeder einzelne dargestellte Punkt ein Häufigkeitswert. Jedoch ist als Datensatz zu jeder Authentifizierung die Uhrzeit bestimmt, d. h. jede einzelne Authentifizierung kann genau einer Uhrzeit zugeordnet werden. Somit kann zu kurzen Uhrzeitintervallen, wie beispielsweise 5 Minuten oder 10 Minuten, eine Anzahl in diesen Zeitbereich fallender Häufigkeiten angegeben werden. Beispielsweise fanden in dem Zeitraum zwischen 8 Uhr und 8:15 Uhr drei Authentifizierungen statt, in dem Zeitraum zwischen 8:15 Uhr und 8:30 Uhr vier Authentifizierungen usw. Die Anzahl der Authentifizierungen hängt hierbei von einer Personengruppe ab, die dem Authentifizierungssystem 100 zugeordnet ist. Dies ist im Ausführungsbeispiel eine Abteilung einer Firma. Die Abteilung der Firma umfasst beispielsweise 26 Personen. In einer weiteren Ausgestaltung handelt es sich um alle Betriebsangehörigen einer Firma, um einen kleinen Teil einer Abteilung einer Firma, um einzelne Personen oder eine besondere Gruppe von Personen.

Der Zeitverlauf in dem Häufigkeitsdiagramm mit der Häufigkeitskurve 201 aus Fig. 2 ist durch senkrechte Striche in unterschiedliche Zeitintervalle A, B, C aufgeteilt. Die Zeitintervalle A, B, C bilden eine vorbestimmte Zeitintervallgruppe. Im gezeigten Ausführungsbeispiel handelt es sich um ein erstes Zeitintervall A, einen Normalzeitraum, ein zweites Zeitintervall B, einen Übergangszeitraum, und ein drittes Zeitintervall C, einen sogenannten Anomaliezeitraum. In weiteren Ausgestaltungen können auch nur zwei Zeitintervalle oder aber auch mehr Zeitintervalle als drei Zeitintervalle definiert werden. Es sind wenigstens zwei Zeitintervalle in der vorbestimmten Zeitintervallgruppe definiert.

Im gezeigten Ausführungsbeispiel sind die Zeitintervalle abhängig von der Häufigkeit der Authentifizierungen, d.h. abhängig von der Häufigkeitskurve 201. Im gezeigten Ausführungsbeispiel beginnt das erste Zeitintervall A eine Stunde nach dem Anfang der Häufigkeitskurve 201, d. h. eine Stunde nach der ersten Authentifizierung in diesem 24-Stunden-Bereich. Gemäß Fig. 2 beginnt das erste Zeitintervall A um 9 Uhr. Das erste Zeitintervall A endet um 19 Uhr. Dies entspricht einer Stunde vor dem Ende der Häufigkeitskurve 201 bzw. einer Stunde vor der letzten Authentifizierung in diesem 24-Stunden-Zeitraum. Im ersten Zeitintervall A, also im Normalbereich, sind viele Authentifizierungen erfolgt. Das heißt, es sind viele berechtigte Personen innerhalb des Sicherheitsbereichs. Da viele berechtigte Personen innerhalb des Sicherheitsbereichs anwesend sind, sinkt die Wahrscheinlichkeit, dass sich ein unberechtigter Dritter ohne aufzufallen in dem Sicherheitsbereich aufhält. Gemäß dem Ausführungsbeispiel wird im ersten Zeitintervall A lediglich ein Token abgefragt. Im Allgemeinen wird im ersten Zeitintervall A, dem Normalbereich, lediglich ein personenbezogenes Merkmal erfasst. In einer alternativen Ausgestaltung werden mehr personenbezogene Merkmale als ein personenbezogenes Merkmal erfasst, jedoch weniger personenbezogene Merkmale als in den Zeitintervallen B, C oder weiteren Zeitintervallen.

Das Zeitintervall B hat zwei einzelne Teile, die gemäß Fig. 2 von 6 Uhr bis 9 Uhr und von 20 Uhr bis 22 Uhr reichen. Das Zeitintervall B, d. h. der Übergangsbereich, beginnt eineinhalb Stunden vor der ersten Authentifizierung in diesem 24-Stunden-Bereich und endet eineinhalb Stunden nach der ersten Authentifizierung in diesem 24-Stunden-Bereich und fängt wieder eineinhalb Stunden vor der letzten Authentifizierung in diesem 24-Stunden-Bereich an und hört ein zweites Mal eineinhalb Stunden nach der letzten Authentifizierung in diesem 24-Stunden-Bereich auf. So ergeben sich zwei Abschnitte, die dem zweiten Zeitintervall zugerechnet werden, jeweils in einem Zeitraum um den Anfang bzw. das Ende der Häufigkeitskurve 201 herum.

Zu Beginn des zweiten Zeitintervalls sind noch keine Personen in dem Sicherheitsbereich eingeloggt. Die Häufigkeit der Authentifizierungen entspricht null. Sind noch keine Personen in dem Sicherheitsbereich, so muss jede Person, die den Sicherheitsbereich betritt, ein erhöhtes Maß an Sicherheitsvorkehrungen über sich ergehen lassen. Gemäß dem beschriebenen Ausführungsbeispiel werden zusätzlich zu dem erfassten Token, der auch in dem ersten Zeitintervall A erfasst wird, biometrische Daten, beispielsweise ein Iris-Scan, erfasst. Loggt sich also die erste Person gegen 8 Uhr ein und kommen dann weitere Personen hinzu, so sind um 9 Uhr mehrere Personen in dem Sicherheitsbereich eingeloggt, die jeweils diese (leicht erhöhten) Sicherheitsvorkehrungen über sich ergehen lassen mussten. Ab einer bestimmten Personenanzahl sind dann genug Personen in dem Sicherheitsbereich, und der Normalbereich kann beginnen.

Umgekehrt findet das Ganze zum Ende des Tages statt. Gegen 19 Uhr beginnt der Übergangsbereich am Abend, d. h. das zweite Zeitintervall B beginnt erneut. Während tagsüber in dem ersten Zeitintervall A lediglich eine verringerte Anzahl an personenbezogenen Merkmalen zu jeder Authentifizierung abgefragt wurde, so wird im zweiten Zeitintervall B am Abend erneut genauso wie im zweiten Zeitintervall B in der Früh ein zusätzliches Merkmal, hier der Iris-Scan als biometrisches Merkmal, erfasst.

In einer weiteren Ausgestaltung erstreckt sich das zweite Zeitintervall B lediglich auf einen einzelnen Zeitbereich des 24-Stunden-Zeitraums, z. B. lediglich über den Anfangsbereich der Häufigkeitskurve 201, wie in Fig. 2 zwischen 6 und 9 Uhr. In dieser Ausgestaltung kann am Ende der Häufigkeitskurve 201 ein anderer, beispielsweise ein dritter oder ein vierter Zeitbereich erfolgen, in dem wieder andere personenbezogene Merkmale bzw. eine andere Anzahl personenbezogener Merkmale erfasst werden. In einer weiteren Ausgestaltung ist das erste Zeitintervall A auch in mehrere einzelne Zeitbereiche aufgeteilt, so dass beispielsweise während einer Mittagspause, in der Mitarbeiter den Sicherheitsbereich verlassen, wieder erneut wie in dem zweiten Zeitintervall B vermehrte personenbezogene Daten und Merkmale erfasst werden.

In Fig. 2 ist des Weiteren ein drittes Zeitintervall C dargestellt. Das dritte Zeitintervall C grenzt hierbei an das zweite Zeitintervall B an, so dass das dritte Zeitintervall C von 0 Uhr bis 6 Uhr sowie von 22 Uhr bis 24 Uhr reicht. Dieses dritte Zeitintervall kann als Anomalie-Zeitintervall bezeichnet werden. Jede Authentifizierung, d.h. jeder Authentifizierungsversuch innerhalb dieses dritten Zeitintervalls C wird gleich behandelt wie eine Anomalie.

Eine Anomalie ist eine Auffälligkeit bei Authentifizierungen. Beispielsweise kann eine Anomalie eine fehlerhafte Authentifizierung sein, ein unberechtigter Dritter, der sich Zutritt zu verschaffen versucht, oder aber auch eine fehlerhafte Datei oder ein Problem in einem Computersystem oder dergleichen. Bei einer derartigen Anomalie werden nochmals im Vergleich zu dem zweiten Zeitintervall B erweiterte Sicherheitsvorkehrungen getroffen, so dass beispielsweise zusätzliche personenbezogene Merkmale abgefragt werden.

Im dritten Zeitintervall C wird gemäß dem gezeigten Ausführungsbeispiel zusätzlich ein drittes personenbezogenes Merkmal abgefragt, hier eine alphanumerische Zeichenkette, d. h. ein Passwort. In einer weiteren Ausgestaltung wird zusätzlich ein Sicherheitspersonal informiert, oder weitere alternative und zusätzliche personenbezogene Merkmale werden erfasst.

Das Authentifizierungssystem 100 passt die Zeitintervalle der vorbestimmten Zeitintervallgruppe während eines Betriebs des Authentifizierungssystems 100 dynamisch an. D. h., die Länge der Zeitintervalle kann variiert werden. Im beschriebenen Ausführungsbeispiel hängt die Länge des ersten Zeitraums A von den Häufigkeiten der Authentifizierungen ab. Insbesondere fängt das erste Zeitintervall A zeitlich kurz nach einer ersten Authentifizierung an und endet kurz vor einer letzten Authentifizierung eines 24-Stunden-Zeitraums. Das zweite Zeitintervall B definiert einen Bereich um den ersten und um den letzten Authentifizierungsversuch innerhalb des 24-Stunden-Zeitraums herum. Das dritte Zeitintervall C ist abhängig von dem ersten und dem zweiten Zeitintervall A, B. Durch eine Veränderung der Häufigkeiten, d. h. durch zusätzliche oder weniger Authentifizierungen zu bestimmten Zeitpunkten oder in bestimmten Zeitbereichen, wie einem Prüfzeitbereich von 10 oder 15 min beispielsweise, kann das Authentifizierungssystem 100 die unterschiedlichen Zeitintervalle der vorbestimmten Zeitintervallgruppe A, B, C neu definieren.

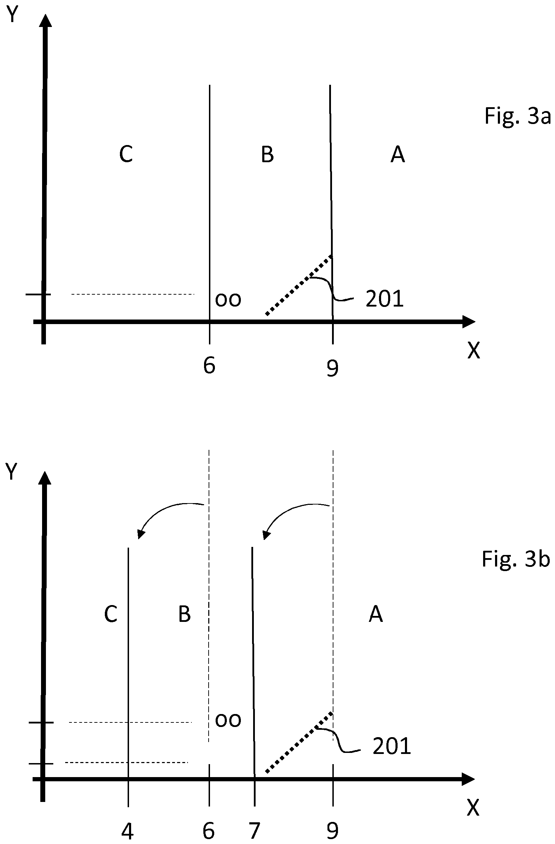

Fig. 3a und Fig. 3b zeigen zwei weitere Graphen. Fig. 3a ist ein schematischer Ausschnitt aus dem Häufigkeitsdiagramm von Fig. 2. Fig. 3a zeigt schematisch den Anfang der Häufigkeitskurve 201 in dem zweiten Zeitintervall B. Zusätzlich zeigt Fig. 3a zwei einzelne Authentifizierungen kurz nach 6 Uhr innerhalb des zweiten Zeitintervalls B, dargestellt durch zwei Kreise. Durch eine gestrichelte Linie und eine Markierung auf der Y-Achse ist eine erste Häufigkeit zu den zwei einzelnen Authentifizierungen markiert. Die beiden einzelnen Authentifizierungen, die durch die Kreise dargestellt sind, liegen vor den bisherigen Authentifizierungen, d. h. zeitlich vor der Häufigkeitskurve 201, insbesondere vor dem Anfang der Häufigkeitskurve 201. Das zweite Zeitintervall B ist eineinhalb Stunden vor und eineinhalb Stunden nach dem Anfang der Häufigkeitskurve 201 herum definiert.

Fig. 3b zeigt eine weitere Darstellung eines Häufigkeitsgraphen. Fig. 3b zeigt eine Anpassung der unterschiedlichen Zeitintervalle. Hierbei sind die Zeitintervalle an die neuen Authentifizierungen, die in Figur 3b durch zwei Kreise dargestellt sind, angepasst. Die senkrechten gestrichelten Linien zeigen die bisherigen Zeitintervallgrenzen, wie in Fig. 3a und Fig. 2 dargestellt. Durch die Pfeile und die durchgezogenen senkrechten Striche zu 4 Uhr und 7 Uhr sind die neuen Zeitintervallgrenzen definiert. Das erste Zeitintervall A beginnt in der Ausgestaltung von Fig. 3b nun anstatt um 9 Uhr schon um 7 Uhr. Das zweite Zeitintervall B beginnt um 4 Uhr und reicht bis 7 Uhr, und das Zeitintervall C reicht bis 4 Uhr anstatt bis 6 Uhr. Diese Verschiebung der Zeitintervalle kommt dadurch zustande, dass die Häufigkeit der ersten Authentifizierungen im Vergleich zu dem Graphen von Fig. 3a zwischen 6 Uhr und 7 Uhr gestiegen ist. Dies ist durch die waagrechten bzw. horizontalen gestrichelten Linien und die Häufigkeitsmarkierungen auf der Y-Achse dargestellt. D. h., verglichen mit den vom Authentifizierungssystem 100 erfassten Authentifizierungen, wie zu Fig. 3a beschrieben, sind von dem Authentifizierungssystem 100 gemäß Fig. 3b nun mehr Authentifizierungen erfasst worden. Diese Steigerung von Authentifizierungen fand vor 7 Uhr statt. D. h., vor 7 Uhr befinden sich nun mehr Personen in dem Sicherheitsbereich als früher zu dem Zeitpunkt von Fig. 3a. Das Authentifizierungssystem 100 ist also so ausgestaltet, dass im laufenden Betrieb die Grenzen der einzelnen unterschiedlichen Zeitintervalle der vorbestimmten Zeitintervallgruppe A, B, C angepasst werden.

Beispielsweise werden die unterschiedlichen Zeitintervalle den Sicherheitskriterien, wie Grenzwerte von beispielsweise drei oder fünf Authentifizierungen oder aber auch eines Merkmals, wie einer authentifizierten Identität, die zu einer Person gehört, im laufenden Betrieb angepasst. Durch die Anpassung sind die Sicherheitskriterien weiterhin erfüllt. Dies erleichtert den Benutzern und berechtigten Personen den Zutritt zu dem Sicherheitsbereich, auch wenn sich deren Gewohnheiten oder Termine verschieben. Eine solche Anpassung kann in einem nicht beanspruchten Beispiel monatlich oder jährlich stattfinden, indem in einem vorhergehenden Zeitraum von beispielsweise einem Monat die Authentifizierungsdaten ausgewertet werden, um eine Veränderung von Authentifizierungen wie zwischen den Fig. 3a und 3b zu erkennen. Im Ausführungsbeispiel liegen zwischen den Graphen der Fig. 3a und 3b ein Monat Zeit. Die dargestellten Häufigkeitskurven und -werte beziehen sich hierbei auf den vorhergehenden Zeitraum. Die Zeitintervallgrenzen hingegen gelten aufgrund dieser Häufigkeitskurven für den nachfolgenden Zeitraum bis zur nächsten Anpassung.

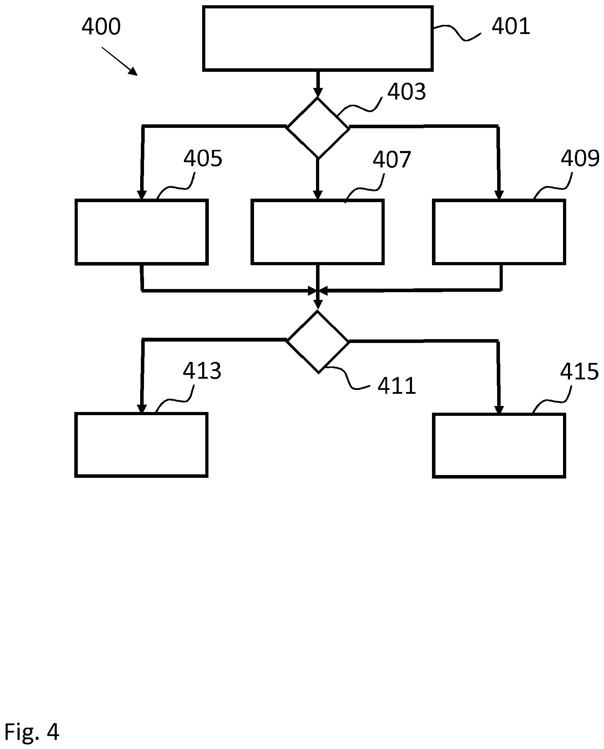

Fig. 4 zeigt eine schematische Darstellung eines Ablaufdiagramms gemäß einer Ausgestaltung der Erfindung. In einem ersten Schritt 401 wird von der Erfassungseinrichtung eine Authentifizierung angefordert. Im Ausführungsbeispiel hält hier ein Benutzer seinen Ausweis mit einem Token an einen Funkscanner der Erfassungseinrichtung 101. Die Erfassungseinrichtung 101 weist dieser Authentifizierungsanfrage einen Zeitpunkt zu. Beispielsweise wenn der Benutzer sein Token um 7 Uhr morgens an die Erfassungseinrichtung 101 hält, so weist die Erfassungseinrichtung 101 dieser Authentifizierung den Zeitpunkt 7 Uhr zu.

In Schritt 403 wird überprüft, in welchem Zeitintervall der vorbestimmten Zeitintervallgruppe A, B, C die Authentifizierung stattfindet. Befindet sich der Zeitpunkt in dem ersten Zeitintervall A, also gemäß dem Graphen aus Fig. 2 zwischen 9 Uhr und 19 Uhr, so wird Schritt 405 ausgeführt. Befindet sich der Zeitstempel im Übergangsbereich, d. h. in dem zweiten Zeitintervall B, also zwischen 6 und 9 Uhr oder zwischen 19 und 22 Uhr, so wird der Verfahrensschritt 407 ausgeführt. Befindet sich der Zeitstempel in dem Anomaliebereich, d. h. in dem dritten Zeitintervall zwischen 0 Uhr und 6 Uhr oder zwischen 22 Uhr und 24 Uhr, so wird der Verfahrensschritt 409 ausgeführt. Im Folgenden werden die einzelnen Verfahrensschritte 405, 407 und 409 separat erläutert.

Im Verfahrensschritt 405 werden personenbezogene Merkmale aus dem Token ausgelesen. Die personenbezogenen Merkmale umfassen beispielsweise einen Namen und eine Personalidentifikationsnummer. Im ersten Zeitintervall A werden personenbezogene Merkmale ausgelesen, die einem berechtigten Benutzer des Authentifizierungssystems 100 ein möglichst einfaches Authentifizieren ermöglichen. Die Sicherheitsstufe bzw. der Sicherheitsgrad ist hierbei vergleichsweise gering, da im beschriebenen Ausführungsbeispiel lediglich ein personenbezogenes Merkmal von dem Token, d. h. der Token, ausgelesen wird.

Im Verfahrensschritt 407 wird alternativ das Authentifizierungsschema zum zweiten Zeitintervall B ausgeführt. Im beschriebenen Ausführungsbeispiel umfasst dies die Abfrage des Tokens, wie im Verfahrensschritt 405, und zusätzlich noch die Erfassung eines biometrischen Merkmals, hier den Iris-Scanner. In anderen Ausgestaltungen unterscheiden sich die erfassten personenbezogenen Merkmale, so dass personenbezogene Merkmale alternativ oder zusätzlich zu dem personenbezogenen Merkmal gemäß Schritt 405 ausgeführt werden können.

Im Verfahrensschritt 409, werden im dritten Zeitintervall C mehr personenbezogene Merkmale als in den anderen beiden Zeitintervallen A, B abgefragt. Beispielsweise weiter zusätzlich zu dem Token und dem biometrischen Abgleich eine alphanumerische Zeichenfolge abgefragt. In einer weiteren Ausgestaltung werden nicht mehr personenbezogene Merkmale als in den anderen Zeitintervallen abgefragt, sondern lediglich solche personenbezogene Merkmale, die eine erhöhte Sicherheit gewährleisten. Dies kann beispielsweise ein besonders starkes Passwort oder die Auswahl eines Benutzernamens sein. In einer weiteren Ausgestaltung kann in einem der Zeitintervalle als zusätzliches personenbezogenes Merkmal ein Wachdienst verständigt werden, der eine persönliche Kontrolle der zu authentifizierenden Person vornimmt. Eine derartige Sicherheitsvorkehrung kann bevorzugt im dritten Zeitintervall C durchgeführt werden, dem Anomaliebereich.

Abhängig davon, wie der Verfahrensschritt 403 ausgegangen ist, d. h. welcher der Verfahrensschritte 405, 407 oder 409 durchgeführt wurde, wird im Schritt 411 eine Überprüfung der dem entsprechenden Authentifizierungsschema zugeordneten personenbezogenen Merkmale durchgeführt. Im Falle des oben beschriebenen Authentifizierungsschemas zum ersten Zeitintervall A wird eine Überprüfung der auf dem Token gespeicherten elektronischen Datensätze mit dem in dem Speicher 105 hinterlegten Referenzdatensatz abgeglichen. Entsprechendes wird mit den anderen Authentifizierungsschemas gemacht, die den Verfahrensschritten 407 oder 409 zugeordnet sind. Im Verfahrensschritt 411 wird also abhängig von den ausgewählten Authentifizierungsschemas eine Anzahl personenbezogener Merkmale abgeglichen. Fällt der Abgleich aus Verfahrensschritt 411 positiv aus, so wird im Verfahrensschritt 413 eine Authentifizierung erfolgreich abgeschlossen und Zugang zu dem Sicherheitsbereich gewährt.

Wird alternativ im Verfahrensschritt 411 festgestellt, dass der Abgleich negativ war, so wird im Verfahrensschritt 415 der Zutritt verweigert und die Authentifizierung negativ abgeschlossen.

In dieser Ausgestaltung kann zusätzlich ein Sicherheitsdienst verständigt oder ein Alarm ausgelöst werden.

Somit kann automatisiert und datengestützt bestimmt werden, wie hoch der Schutzbedarf zu einem bestimmten Zeitpunkt an einem Authentifizierungssystem 100, insbesondere einer Sicherheitsschleuse, ist. Dies kann eine Mehrfach-Autorisierung umfassen, bei der mehrere personenbezogene Merkmale zu einer Authentifizierung erfasste werden.

Durch das Authentifizierungssystem 100 kann des Weiteren ein Normalzustand, das heißt, das erste Zeitintervall A, dynamisch ermittelt werden, indem das System überprüft, was als normal zu interpretieren ist. Die weiteren Zeitintervalle B, C sind vom ersten Zeitintervall A abhängig.

Für eine initiale Festlegung der Zeitintervalle der vorbestimmten Zeitintervallgruppe A, B, C kann eine Anlernphase durchgeführt werden von beispielsweise einem Monat oder über eine bestimmte Anzahl von Authentifizierungen, wie beispielsweise 500 Authentifizierungen, hinweg. In dieser Zeit werden Datensätze gesammelt, sowohl Log- als auch Sensordatenpunkte, bis die Menge aller Datensätze eine statistische Relevanz besitzt und somit zuverlässig von einem normalen Ablauf, d. h. von einer normalen Tagesverteilung der Häufigkeitswerte, ausgegangen werden kann.

Durch dieses Authentifizierungssystem 100 kann des Weiteren auch eine anonymisierte Erstellung eines Personenprofils stattfinden. So kann beispielsweise festgelegt werden, dass eine bestimmte Person, die einem Datensatz zugeordnet ist, jeden Morgen um 7 Uhr den Sicherheitsbereich betritt und um 16 Uhr den Sicherheitsbereich verlässt. Sollten sich hierbei Abweichungen bei dieser bestimmten Person ergeben, so kann des Weiteren auch eine Anomalieabfrage stattfinden, wie beispielsweise in dem dritten Zeitbereich C.

### BEZUGSZEICHENLISTE

- 100: Authentifizierungssystem
- 101: Erfassungseinrichtung
- 103: Prozessor
- 105: Speicher
- 107: Token
- 201: Häufigkeitskurve
- X, Y: Achse
- A, B, C: Zeitintervall
- 400: Flussdiagramm
- 401-415: Verfahrensschritt

## Patentansprüche

1. Authentifizierungssystem (100) zur Authentifizierung einer Person in unterschiedlichen Zeitintervallen einer vorbestimmten Zeitintervallgruppe (A, B, C), wobei jedem vorbestimmten Zeitintervall ein unterschiedliches Authentifizierungsschema zugeordnet ist, mit:
einer Erfassungseinrichtung (101), die dazu eingerichtet ist, zumindest ein personenbezogenes Merkmal einer Person in einem aktuellen Zeitintervall der Zeitintervallgruppe (A, B, C) zu erfassen; und
einem Prozessor (103), welcher dazu eingerichtet ist, die Person auf der Basis desjenigen Authentifizierungsschemas zu authentifizieren, das dem aktuellen Zeitintervall zugeordnet ist,
wobei die Zeitintervallgruppe (A, B, C) ein erstes Zeitintervall und ein zweites Zeitintervall umfasst, wobei dem ersten Zeitintervall ein erstes Authentifizierungsschema und dem zweiten Zeitintervall ein zweites Authentifizierungsschema zugeordnet sind, wobei das erste Authentifizierungsschema die Erfassung des zumindest einen personenbezogenen Merkmals umfasst, wobei das zweite Authentifizierungsschema die zusätzliche Erfassung eines zweiten personenbezogenen Merkmals umfasst, wobei die Erfassungseinrichtung (101) ausgebildet ist, das zumindest eine personenbezogene Merkmal zu erfassen, falls das aktuelle Zeitintervall dem ersten Zeitintervall entspricht, und zusätzlich das zweite personenbezogene Merkmal zu erfassen, falls das aktuelle Zeitintervall dem zweiten Zeitintervall entspricht,
wobei der Prozessor (103) ausgebildet ist, die Person auf der Basis des jeweils erfassten personenbezogenen Merkmals zu authentifizieren,
wobei die Erfassungseinrichtung (101) oder der Prozessor (103) ausgebildet ist, einen Zeitpunkt der Authentifizierung der Person zu erfassen und den erfassten Zeitpunkt der Authentifizierung dem ersten Zeitintervall oder dem zweiten Zeitintervall zuzuordnen,
wobei zumindest ein Zeitintervall der vorbestimmten Zeitintervallgruppe (A, B, C) durch eine vorbestimmte Häufigkeit von Authentifizierungen charakterisiert ist, und wobei der Prozessor (103) ausgebildet ist, eine Häufigkeit von Authentifizierungen im laufenden Betrieb zu überwachen, um das Erreichen der vorbestimmten Häufigkeit zu detektieren,
und wobei der Prozessor (103) dazu ausgebildet ist, einen Anfangszeitpunkt und/oder einen Endzeitpunkt des zumindest einen Zeitintervalls der vorbestimmten Zeitintervallgruppe (A, B, C) im laufenden Betrieb anzupassen, wenn die überwachte Häufigkeit von Authentifizierungen innerhalb des Zeitintervalls einen vorbestimmten ersten Grenzwert unterschreitet oder außerhalb des Zeitintervalls einen vorbestimmten zweiten Grenzwert überschreitet.

2. Authentifizierungssystem (100) nach Anspruch 1, wobei die überwachte Häufigkeit innerhalb des Zeitintervalls ein erstes Auftreten einer Authentifizierung und/oder ein letztes Auftreten einer Authentifizierung innerhalb eines Prüfzeitbereichs umfasst.

3. Authentifizierungssystem (100) nach Anspruch 1 oder 2, wobei zumindest ein weiteres Zeitintervall der vorbestimmten Zeitintervallgruppe (A, B, C) durch den Anfangszeitpunkt und/oder den Endzeitpunkt des zumindest einen Zeitintervalls charakterisiert ist, und wobei der Prozessor (103) dazu ausgebildet ist, einen Anfangszeitpunkt und/oder einen Endzeitpunkt des zumindest einen weiteren Zeitintervalls basierend auf dieser Charakterisierung festzulegen.

4. Authentifizierungssystem (100) nach einem der vorstehenden Ansprüche, wobei die Erfassungseinrichtung (101) dazu ausgebildet ist, als personenbezogenes Merkmal zumindest eines der folgenden personenbezogenen Merkmale, insbesondere optisch oder elektronisch, zu erfassen: einen elektronischen Datensatz, insbesondere , ein biometrisches Merkmal der Person oder eine elektronische Datei, insbesondere ein Token (107), oder ein Sicherheitsmerkmal eines Identifikationsdokumentes oder eine Zeichenfolge einer maschinenlesbaren Zone des Identifikationsdokumentes zu erfassen.

5. Authentifizierungssystem (100) nach einem der vorstehenden Ansprüche, wobei die Erfassungseinrichtung (101) ausgebildet ist, das personenbezogene Merkmal optisch, insbesondere anhand eines Identifikationsdokumentes der Person oder durch Aufnahme eins biometrischen Merkmals der Person, zu erfassen.

6. Authentifizierungssystem (100) nach einem der vorstehenden Ansprüche, wobei das personenbezogene Merkmal eine elektronische Datei oder ein elektronischer Datensatz ist, und wobei die Erfassungseinrichtung (101) eine Kommunikationsschnittstelle aufweist, welche ausgebildet ist, das personenbezogenen Merkmal elektronisch zu erfassen, insbesondere aus einem Chip eines Identifikationsdokumentes, auszulesen.

7. Authentifizierungssystem (100) nach einem der vorstehenden Ansprüche, wobei der Prozessor (103) ausgebildet ist, das jeweilige personenbezogene Merkmal mit einem referenzmerkmal zu vergleichen, um die Person bei einer Vergleichsübereinstimmung zu authentifizieren.

8. Verfahren zur Authentifizierung einer Person in unterschiedlichen Zeitintervallen einer vorbestimmten Zeitintervallgruppe (A, B, C), wobei jedem vorbestimmten Zeitintervall ein unterschiedliches Authentifizierungsschema zugeordnet ist, unter Verwendung des Authentifizierungssystems (100) nach einem der vorstehenden Ansprüche, mit:
Erfassen zumindest eines personenbezogenen Merkmals einer Person in einem aktuellen Zeitintervall der Zeitintervallgruppe mittels der Erfassungseinrichtung (101); und
Authentifizieren der Person auf der Basis desjenigen Authentifizierungsschemas, das dem aktuellen Zeitintervall zugeordnet ist, mittels des Prozessors (103),
wobei die Zeitintervallgruppe (A, B, C) ein erstes Zeitintervall und ein zweites Zeitintervall umfasst, wobei dem ersten Zeitintervall ein erstes Authentifizierungsschema und dem zweiten Zeitintervall ein zweites Authentifizierungsschema zugeordnet sind, wobei das erste Authentifizierungsschema die Erfassung des zumindest einen personenbezogenen Merkmals umfasst, wobei das zweite Authentifizierungsschema die zusätzliche Erfassung eines zweiten personenbezogenen Merkmals umfasst,
wobei die Erfassungseinrichtung (101) das zumindest eine personenbezogene Merkmal erfasst, falls das aktuelle Zeitintervall dem ersten Zeitintervall entspricht, und zusätzlich das zweite personenbezogene Merkmal erfasst, falls das aktuelle Zeitintervall dem zweiten Zeitintervall entspricht,
wobei der Prozessor (103) die Person auf der Basis des jeweils erfassten personenbezogenen Merkmals authentifiziert,
wobei zumindest ein Zeitintervall der vorbestimmten Zeitintervallgruppe (A, B, C) durch eine vorbestimmte Häufigkeit von Authentifizierungen charakterisiert ist, und wobei der Prozessor (103) ausgebildet ist, eine Häufigkeit von Authentifizierungen im laufenden Betrieb zu überwachen, um das Erreichen der vorbestimmten Häufigkeit zu detektieren,
und wobei der Prozessor (103) dazu ausgebildet ist, einen Anfangszeitpunkt und/oder einen Endzeitpunkt des zumindest einen Zeitintervalls der vorbestimmten Zeitintervallgruppe (A, B, C) im laufenden Betrieb anzupassen, wenn die überwachte Häufigkeit von Authentifizierungen innerhalb des Zeitintervalls einen vorbestimmten ersten Grenzwert unterschreitet oder außerhalb des Zeitintervalls einen vorbestimmten zweiten Grenzwert überschreitet.

9. Computer-Programm-Produkt mit einem Programmcode zur Ausführung des Verfahrens nach Anspruch 8, wenn der Programmcod im Authentifizierungssystem nach Anspruch 1 ausgeführt wird.

## Claims

1. Authentication system (100) for authenticating a person in different time intervals of a predetermined time interval group (A, B, C), wherein each predetermined time interval is assigned a different authentication scheme, comprising:
a detection device (101), which is configured to detect at least one personal feature of a person in a current time interval of the time interval group (A, B, C); and
a processor (103), which is configured to authenticate the person based on the authentication scheme associated with the current time interval,
wherein the time interval group (A, B, C) comprises a first time interval and a second time interval, wherein the first time interval is assigned a first authentication scheme and the second time interval is assigned a second authentication scheme, wherein the first authentication scheme comprises the detection of the at least one personal feature, wherein the second authentication scheme comprises the additional detection of a second personal feature, wherein the detection device (101) is configured to detect the at least one personal feature if the current time interval corresponds to the first time interval, and to additionally detect the second personal feature if the current time interval corresponds to the second time interval,
wherein the processor (103) is configured to authenticate the person based on the respective detected personal feature,
wherein the detection device (101) or the processor (103) is configured to detect a time of the authentication of the person and to assign the detected time of the authentication to the first time interval or the second time interval,
wherein at least one time interval of the predetermined time interval group (A, B, C) is **characterized by** a predetermined frequency of authentications, and wherein the processor (103) is configured to monitor a frequency of authentications during operation in order to detect the reaching of the predetermined frequency,
and wherein the processor (103) is configured to adapt a start time and/or an end time of the at least one time interval of the predetermined time interval group (A, B, C) during operation, when the monitored frequency of authentications within the time interval falls below a predetermined first limit value or exceeds a predetermined second limit value outside the time interval.

2. Authentication system (100) according to claim 1, wherein the monitored frequency within the time interval comprises a first occurrence of an authentication and/or a last occurrence of an authentication within a test time range.

3. Authentication system (100) according to claim 1 or 2, wherein at least one further time interval of the predetermined time interval group (A, B, C) is **characterized by** the start time and/or the end time of the at least one time interval, and wherein the processor (103) is configured to determine a start time and/or an end time of the at least one further time interval based on this characterization.

4. Authentication system (100) according to one of the preceding claims, wherein the detection device (101) is configured to detect at least one of the following personal features, in particular optically or electronically, as the personal feature: an electronic data set, in particular, a biometric feature of the person or an electronic file, in particular a token (107), or a security feature of an identification document or a character string of a machine-readable zone of the identification document.

5. Authentication system (100) according to one of the preceding claims, wherein the detection device (101) is configured to detect the personal feature optically, in particular based on an identification document of the person or by recording a biometric feature of the person.

6. Authentication system (100) according to one of the preceding claims, wherein the personal feature is an electronic file or an electronic data set, and wherein the detection device (101) comprises a communication interface, which is configured to electronically detect the personal feature, in particular to read it from a chip of an identification document.

7. Authentication system (100) according to one of the preceding claims, wherein the processor (103) is configured to compare the respective personal feature with a reference feature in order to authenticate the person in the event of a comparison match.

8. Method for authenticating a person in different time intervals of a predetermined time interval group (A, B, C), wherein each predetermined time interval is assigned a different authentication scheme, using the authentication system (100) according to one of the preceding claims, comprising:
detecting at least one personal feature of a person in a current time interval of the time interval group by means of the detection device (101); and
authenticating the person based on the authentication scheme associated with the current time interval by means of the processor (103),
wherein the time interval group (A, B, C) comprises a first time interval and a second time interval, wherein the first time interval is assigned a first authentication scheme and the second time interval is assigned a second authentication scheme, wherein the first authentication scheme comprises the detection of the at least one personal feature, wherein the second authentication scheme comprises the additional detection of a second personal feature,
wherein the detection device (101) detects the at least one personal feature if the current time interval corresponds to the first time interval, and additionally detects the second personal feature if the current time interval corresponds to the second time interval, wherein the processor (103) authenticates the person based on the respective detected personal feature,
wherein at least one time interval of the predetermined time interval group (A, B, C) is **characterized by** a predetermined frequency of authentications, and wherein the processor (103) is configured to monitor a frequency of authentications during operation in order to detect the reaching of the predetermined frequency,
and wherein the processor (103) is configured to adapt a start time and/or an end time of the at least one time interval of the predetermined time interval group (A, B, C) during operation, when the monitored frequency of authentications within the time interval falls below a predetermined first limit value or exceeds a predetermined second limit value outside the time interval.

9. Computer program product with a program code for executing the method according to claim 8, when the program code is executed in the authentication system according to claim 1.

## Revendications

1. Système d'authentification (100) pour authentifier une personne dans différents intervalles de temps d'un groupe d'intervalles de temps prédéterminés (A, B, C), dans lequel à chaque intervalle de temps prédéterminé est attribué un schéma d'authentification différent, comprenant :
un dispositif de détection (101), qui est configuré pour détecter au moins une caractéristique personnelle d'une personne dans un intervalle de temps actuel du groupe d'intervalles de temps (A, B, C) ; et
un processeur (103), qui est configuré pour authentifier la personne sur la base du schéma d'authentification associé à l'intervalle de temps actuel,
dans lequel le groupe d'intervalles de temps (A, B, C) comprend un premier intervalle de temps et un second intervalle de temps, dans lequel le premier intervalle de temps est affecté à un premier schéma d'authentification et le second intervalle de temps est affecté à un second schéma d'authentification, dans lequel le premier schéma d'authentification comprend la détection de la ou des caractéristiques personnelles, dans lequel le second schéma d'authentification comprend la détection supplémentaire d'une seconde caractéristique personnelle, dans lequel le dispositif de détection (101) est configuré pour détecter la ou les caractéristiques personnelles si l'intervalle de temps actuel correspond au premier intervalle de temps, et pour détecter en plus la seconde caractéristique personnelle si l'intervalle de temps actuel correspond au second intervalle de temps,
dans lequel le processeur (103) est configuré pour authentifier la personne sur la base de la caractéristique personnelle détectée respective,
dans lequel le dispositif de détection (101) ou le processeur (103) est configuré pour détecter un moment de l'authentification de la personne et pour attribuer le moment détecté de l'authentification au premier intervalle de temps ou au deuxième intervalle de temps,
dans lequel au moins un intervalle de temps du groupe d'intervalles de temps prédéterminé (A, B, C) est **caractérisé par** une fréquence prédéterminée d'authentifications, et dans lequel le processeur (103) est configuré pour surveiller une fréquence d'authentifications pendant le fonctionnement afin de détecter l'atteinte de la fréquence prédéterminée,
et dans lequel le processeur (103) est configuré pour adapter une heure de début et/ou une heure de fin du ou des intervalles de temps du groupe d'intervalles de temps prédéterminés (A, B, C) pendant le fonctionnement, lorsque la fréquence surveillée des authentifications dans l'intervalle de temps tombe en dessous d'une première valeur limite prédéterminée ou dépasse une seconde valeur limite prédéterminée en dehors de l'intervalle de temps.

2. Système d'authentification (100) selon la revendication 1, dans lequel la fréquence surveillée dans l'intervalle de temps comprend une première occurrence d'une authentification et/ou une dernière occurrence d'une authentification dans une plage de temps de test.

3. Système d'authentification (100) selon la revendication 1 ou 2, dans lequel au moins un autre intervalle de temps du groupe d'intervalles de temps prédéterminé (A, B, C) est **caractérisé par** l'heure de début et/ou l'heure de fin de l'au moins un intervalle de temps, et dans lequel le processeur (103) est configuré pour déterminer une heure de début et/ou une heure de fin de l'au moins un autre intervalle de temps sur la base de cette caractérisation.

4. Système d'authentification (100) selon l'une des revendications précédentes, dans lequel le dispositif de détection (101) est configuré pour détecter au moins l'une des caractéristiques personnelles suivantes, notamment de manière optique ou électronique, en tant que caractéristique personnelle : un ensemble de données électroniques, notamment une caractéristique biométrique de la personne ou un fichier électronique, notamment un jeton (107), ou une caractéristique de sécurité d'un document d'identification ou une chaîne de caractères d'une zone lisible par machine du document d'identification.

5. Système d'authentification (100) selon l'une des revendications précédentes, dans lequel le dispositif de détection (101) est configuré pour détecter la caractéristique personnelle de manière optique, notamment sur la base d'un document d'identification de la personne ou par enregistrement d'une caractéristique biométrique de la personne.

6. Système d'authentification (100) selon l'une des revendications précédentes, dans lequel la caractéristique personnelle est un fichier électronique ou un ensemble de données électroniques, et dans lequel le dispositif de détection (101) comprend une interface de communication, qui est configurée pour détecter électroniquement la caractéristique personnelle, en particulier pour la lire à partir d'une puce d'un document d'identification.

7. Système d'authentification (100) selon l'une des revendications précédentes, dans lequel le processeur (103) est configuré pour comparer la caractéristique personnelle respective avec une caractéristique de référence afin d'authentifier la personne en cas de correspondance de comparaison.

8. Procédé d'authentification d'une personne dans différents intervalles de temps d'un groupe d'intervalles de temps prédéterminés (A, B, C), dans lequel à chaque intervalle de temps prédéterminé est attribué un schéma d'authentification différent, utilisant le système d'authentification (100) selon l'une des revendications précédentes, comprenant :
détecter au moins une caractéristique personnelle d'une personne dans un intervalle de temps actuel du groupe d'intervalles de temps au moyen du dispositif de détection (101) ; et
authentifier la personne sur la base du schéma d'authentification associé à l'intervalle de temps actuel au moyen du processeur (103),
dans lequel le groupe d'intervalles de temps (A, B, C) comprend un premier intervalle de temps et un second intervalle de temps, dans lequel le premier intervalle de temps est affecté à un premier schéma d'authentification et le second intervalle de temps est affecté à un second schéma d'authentification, dans lequel le premier schéma d'authentification comprend la détection d'au moins une caractéristique personnelle, dans lequel le second schéma d'authentification comprend la détection supplémentaire d'une seconde caractéristique personnelle,
dans lequel le dispositif de détection (101) détecte au moins une caractéristique personnelle si l'intervalle de temps actuel correspond au premier intervalle de temps, et détecte en outre la seconde caractéristique personnelle si l'intervalle de temps actuel correspond au second intervalle de temps,
dans lequel le processeur (103) authentifie la personne sur la base de la caractéristique personnelle détectée respective,
dans lequel au moins un intervalle de temps du groupe d'intervalles de temps prédéterminé (A, B, C) est **caractérisé par** une fréquence prédéterminée d'authentifications, et dans lequel le processeur (103) est configuré pour surveiller une fréquence d'authentifications pendant le fonctionnement afin de détecter l'atteinte de la fréquence prédéterminée,
et dans lequel le processeur (103) est configuré pour adapter une heure de début et/ou une heure de fin du ou des intervalles de temps du groupe d'intervalles de temps prédéterminés (A, B, C) pendant le fonctionnement, lorsque la fréquence surveillée des authentifications dans l'intervalle de temps tombe en dessous d'une première valeur limite prédéterminée ou dépasse une seconde valeur limite prédéterminée en dehors de l'intervalle de temps.

9. Produit de programme informatique avec un code de programme pour exécuter le procédé selon la revendication 8, lorsque le code de programme est exécuté dans le système d'authentification selon la revendication 1.
